Europäisches Patentamt

European Patent Office

Office européen des brevets

(19)

(11) Veröffentlichungsnummer: **0 338 321**
**A1**

## (12) EUROPÄISCHE PATENTANMELDUNG

(21) Anmeldenummer: **89105969.3**

(22) Anmeldetag: **05.04.89**

(51) Int. Cl.⁴: **B01D 53/34**

(30) Priorität: **07.04.88 CH 1273/88**

(43) Veröffentlichungstag der Anmeldung:
**25.10.89 Patentblatt 89/43**

(84) Benannte Vertragsstaaten:
**CH DE FR GB IT LI NL SE**

(71) Anmelder: **CIBA-GEIGY AG**
**Klybeckstrasse 141**
**CH-4002 Basel(CH)**

(72) Erfinder: **Bentz, Rolf, Dr.**
**Unterer Rheinweg 86**
**CH-4057 Basel(CH)**

(74) Vertreter: **Patentanwälte TER MEER - MÜLLER**
**- STEINMEISTER**
**Mauerkircherstrasse 45**
**D-8000 München 80(DE)**

(54) **Abluftreinigungsverfahren.**

(57) Die Anmeldung betrifft ein Verfahren zur biologischen Entsorgung und Reinigung von mit Schadstoffen belasteter Abluft mit Hilfe von Biofiltern. Die Abbauleistung der Biofilter wird durch die Zugabe von gasförmigen oder gelösten basischen Verbindungen erhöht.

EP 0 338 321 A1

## Abluftreinigungsverfahren

Die Anmeldung betrifft ein Verfahren zur biologischen Entsorgung und Reinigung von mit Schadstoffen belasteter Abluft mit Hilfe von Biofiltern.

Der Abbau von Schadstoffen in Biofiltern ist bekannt und wird in der Industrie und der Landwirtschaft genutzt. (VDI-Richtlinien 3477, DE-A-3 118 455, EP-A-142 872).

Es hat sich jedoch gezeigt, dass beim Abbau in einem Biofilter je nach Schadstoffzusammensetzung mit der Zeit eine Uebersäuerung des Filtermaterials und damit ein Absinken der biologischen Abbauleistung eintritt. Sinkt der pH im Biofilter oder in der zu entsorgenden Abluft unter einen pH-Wert von 5, so geht die Abbauleistung der Mikroorganismen massiv zurück. Man hat daher versucht der Uebersäuerung entgegenzuwirken, z.B. dadurch dass man feste Materialien wie Kalkstein und Kalziumcarbonat mit dem Biofilterträgermaterial vermischt (EP-A-142 872). Die damit zu erzielenden Ergebnisse sind jedoch eher unbefriedigend. Hinzu kommt, dass mit diesen Materialien weder eine pH-abhängige Dosierung noch eine gute Verteilung möglich ist.

Es wurde nun gefunden, dass diese Nachteile überraschenderweise nicht mehr auftreten, wenn der mit Schadstoffen belasteten Abluft vor ihrem Eintritt in ein Biofilter eine basische Verbindung in gasförmiger oder gelöster Form zugesetzt wird.

Gegenstand der Anmeldung ist somit ein Verfahren zur biologischen Entsorgung und Reinigung von mit Schadstoffen belasteter Abluft mit Hilfe von Biofiltern, dadurch gekennzeichnet, dass die belastete Abluft vor dem Eintritt in ein Biofilter mit einer gasförmigen und/oder in einem Lösungsmittel gelösten basischen Verbindung oder Mischung von basischen Verbindungen versetzt wird.

Unter schadstoffbelasteter Abluft sollen im folgenden Gase, Aerosole und Dämpfe verstanden werden, die beispielsweise in konzentrierter Form bei industriellen Prozessen oder in Tanklagern, sowie in mit Luft verdünnter Form in der Raumluft oder in Abzügen von Laboratorien, Produktions- oder Lagerhallen auftreten.

Bei den Schadstoffen handelt es sich dabei um anorganische oder vorzugsweise organische Verbindungen wie zum Beispiel Kohlenwasserstoffe oder halogenierte Kohlenwasserstoffe wie z.B. Alkane oder Cycloalkane mit 1 bis 12 Kohlenstoffatomen, oder Aromaten, Aldehyde, Ketone, Ether, Carbonsäureester, Sulfone, Alkohole, Thiole, Ester, Nitro- oder Aminoverbindungen oder um Gemische. Insbesondere aber um z.B. Butan, Pentan, Heptan, Octan, Cyclohexan, Cyclooctan, Dekalin, Methylenchlorid, Benzol, Toluol, Phenol, Xylol, Chlorbenzol, Dichlorbenzol, Aceton, Dioxan, Sulfolan, Tetrahydrofuran, Methylisobutylketon, Methanol, Ethanol, Propanol, Isopropanol, Butanol, Pyridin, Dimethylformamid, Acetonitril, Acrylnitril, Acrylsäureester, Acetessigester oder um Gemische.

Als anorganische Verbindungen seien zum Beispiel $H_2S$ und $HCN$ erwähnt.

Der Abbau der Abluft erfolgt in den Biofiltern. Diese Biofilter enthalten Mikroorganismen z.B. aus Belebtschlamm von Kläranlagen und ein Trägermaterial, das die Mikroorganismen gegebenenfalls mit Nährstoffen versorgen kann.

Als Trägermaterial werden beispielsweise Kompost, Torf, Erde, Holzschnitzel, Pflanzenreste wie Reisig, Stroh, Baumrinde oder Heidekraut, oder Mischungen, bevorzugt eine Mischung aus Fasertorf, Heidekraut und Tannenreisig, verwendet. Um das Filtervolumen zu stabilisieren können die Biofilter noch zusätzlich zu diesen natürlichen Trägermaterialien synthetische Zuschlagstoffe wie z.B. Aktivkohle, Polyethylen- und/oder Polystyrol-granulate enthalten.

Da der mikrobiologische Abbau in wässriger Phase stattfindet, muss das Trägermaterial feucht sein. Dies erreicht man gegebenenfalls durch eine Vorrichtung zum Befeuchten der Biofilter, vorzugsweise dadurch, dass die Abluft vor dem Eintritt in ein Biofilter durch einen Befeuchter geleitet wird oder dass über eine Düse Wasser oder Wasserdampf in den Abluftstrom eingespritzt wird. Die für die Befeuchtung verwendete Wassermenge ist abhängig vom Biofilterträgermaterial und kann bis zur Sättigung der Abluft reichen. Der Zusatz der basischen Verbindung zu der belasteten Abluft erfolgt vor, nach und/oder gleichzeitig mit der Befeuchtung z.B. durch Einspritzen, Eindüsen oder Einblasen und zwar vorzugsweise dosiert in Abhängigkeit des pH-Wertes, wobei der pH-Wert im Biofilter, im Kondensat, im Abwasser und/oder in der gereinigten Abluft nach deren Austritt aus dem Biofilter gemessen wird.

Es ist auch möglich die belastete Abluft direkt mit der in Wasser gelösten basischen Verbindung zu befeuchten insbesondere wenn die Schadstoffzusammensetzung der Abluft sowie deren Konzentration konstant ist.

Unter Lösungsmittel sind organische Lösungsmittel und insbesondere Wasser zu verstehen. Bei den organischen Lösungsmittel handelt es sich z.B. um die oben erwähnten, von Mikroorganismen abbaubaren organischen Verbindungen.

Als basische Verbindungen werden Alkali- und/oder Erdalkalihydroxide wie Natrium-, Kalium-, Lithium- und Calciumhydroxid sowie insbesondere stickstoffhaltige Verbindugen wie zum Beispiel Ammoniak, Ammoniumverbindungen wie basische Ammoniumsalze und/oder Amine wie z.B. Mono-, Di- oder Tri-$C_1$-$C_5$-alkylamine beispielsweise Methylamin, Ethylamin, Dimethylamin, Diethylamin und Trimethylamin eingesetzt. Die stickstoffhaltigen Verbindungen haben neben ihrer basischen Wirkung den Vorteil, dass sie zusätzlich als Nährstoff für die Mikroorganismen dienen. Durch die Zugabe von Ammoniumphosphat-Lösung wird als weiterer Nährstoff Phosphor in das Filtermaterial eingebracht.

Von besonderem Interesse ist ein Verfahren bei dem die belastete Abluft nach oder vorzugsweise während der Befeuchtung mit Ammoniakgas oder Ammoniakwasser versetzt wird.

Bei gegebenenfalls stossweise anfallenden Schadstoffen oder Schadstoffgemischen ist es vorteilhaft, die belastete Abluft durch einen separaten Puffer zu leiten, der vor und/oder hinter der Befeuchtungseinrichtung, vor und/oder hinter der Zuleitungseinrichtung für die basischen Verbindungen - falls deren Zuleitung nicht gleichzeitig mit der Befeuchtung erfolgt - oder auch zwischen gegebenenfalls mehreren Biofiltern angeordnet ist.

Der Puffer enthält ein Adsorptionsmittel wie z.B. Kieselgel, Kieselgur, Bleicherde, Aluminiumoxid, Bauxit, Glas, Keramik und insbesondere Aktiv- oder Knochenkohle oder Gemische in Form eines Granulates oder Pulvers mit einer Teilchengrösse von 1 bis 20 mm, vorzugsweise 2 bis 10 mm und insbesondere 3 bis 5 mm.

Das erfindungsgemässe Verfahren zeichnet sich dadurch aus, dass basische Verbindungen in guter Verteilung und in der dem jeweiligen pH-Wert entsprechenden Dosierung dem Biofilter zugeführt werden können. Somit erreicht man für die Mikroorganismen optimale Lebensbedingungen und konstant hohe Abbauleistungen. Durch die Verwendung von stickstoffhaltigen und phosphorhaltigen Basen können die Mikroorganismen ausserdem noch mit zusätzlichen Nährstoffen versorgt werden.

Die nachfolgenden Beispiele erläutern die Erfindung ohne sie darauf zu beschränken.

Beispiel 1

1. Apparatur

Die Apparatur besteht aus einem geschlossenen Biofilter. Das Biofilter hat einen Durchmesser von 0,12 m, eine Füllhöhe von 0,9 m und ein Füllvolumen von 10 l. Als Träger dient Kompost.

Durch diese Anlage wird ein schadstoffhaltiger Luftstrom geleitet, wobei die gewünschte Schadstoffkonzentration im Luftstrom auf folgende Weise erzeugt wird:

ein Teil der Luft wird über ein Rotameter durch eine z.B. mit Lösungsmittel gefüllte Gaswaschflasche, das restliche Luftvolumen über ein Rotameter durch einen thermostatisierten Kolben, gefüllt mit destilliertem Wasser zur Feuchthaltung des Biofilters, geleitet. Die beiden Luftströme werden vor dem Eintritt in das Biofilter vereinigt.

Vor und nach dem Biofilter wird die Schadstoffkonzentration durch eine FID-Messung (Flammen-Ionisations-Detektor) überwacht.

2. Versuch

Die Verweilzeit der Luft je Biofilter beträgt 36 s. Der Luftstrom hat eine Temperatur von 28 °C und ist mit Isopropanol belastet.

Während der gesamten Versuchsphase bleibt das Luftvolumen annähernd konstant, die Lösungsmittelkonzentration in der Zuluft variiert hingegen ebenso wie die Zeitdauer, während der eine konstante Lösungsmittelkonzentration in das System eintritt.

Als basische Verbindungen werden zu verschiedenen Zeitpunkten jeweils 10 ml 30%iges Ammoniakwasser in das Wasser zum Befeuchten des Filtermaterials gegeben. Die Auswirkung dieser Zugaben auf die Abbauleistung ist Tabelle 1 zu entnehmen.

3

Tabelle 1

| Zeitdauer [h] | Zuluft [m³/h] | Schadstoffkonzentration [mg/m³] | | Abbau [%] |
|---|---|---|---|---|
| | | vorher | nachher | |
| 24,5 | 1,12 | 620 | 221 | 64 |
| 24,5 | 1,15 | 663 | 370 | 44 |
| 25 | 1,15 | 685 | 474 | 31 |
| 25 | 1,15 | 683 | 507 | 26 |
| * 28,5 | 1,15 | 740 | 588 | 21 |
| 17 | 1,15 | 715 | 559 | 22 |
| 24 | 1,15 | 487 | 45 | 91 |
| 24 | 1,15 | 609 | 141 | 77 |
| 23,75 | 1,2 | 595 | 252 | 58 |
| 30 | 1,15 | 565 | 279 | 51 |
| 45,5 | 1,15 | 1052 | 758 | 28 |
| * 28,5 | 1,15 | 985 | 751 | 24 |
| 19 | 1,15 | 948 | 684 | 28 |
| 25,5 | 1,15 | 529 | 131 | 75 |
| 24 | 1,15 | 398 | 67 | 83 |
| 25 | 1,15 | 380 | 77 | 80 |
| 28 | 1,15 | 295 | 40 | 86 |

* die basische Verbindung wird zugegeben

Beispiel 2

Entsprechend Beispiel 1 wird ein mit Toluol belasteter Luftstrom (0,5 m³/h) durch ein Biofilter, gefüllt mit einem Kompost/Rinde Gemisch, geleitet. Zu verschiedenen Zeitpunkten werden nach der Befeuchtung mit Wasser jeweils 10 ml 30%iges Ammoniakwasser in den Luftstrom gedüst. Die Auswirkungen dieser Zugaben auf die Abbauleistung ist Tabelle 2 zu entnehmen.

Tabelle 2

| Zeitdauer [Tage] | Schadstoffkonzentration [mg/m³] | | Abbau [%] |
|---|---|---|---|
| | vorher | nachher | |
| 2 | 350 | 350 | 0 |
| 3 | 290 | 140 | 52 |
| 4 | 320 | 30 | 91 |
| 5 | 325 | 0 | 100 |
| 6 | 50 | 0 | 100 |
| 7 | 575 | 40 | 93 |
| 8 | 620 | 0 | 100 |
| 9 | 520 | 20 | 96 |
| 10 | 580 | 100 | 83 |
| 11 | 560 | 220 | 61 |
| 12 | 460 | 130 | 72 |
| 13 | 610 | 220 | 64 |
| 14 | 410 | 100 | 76 |
| 15 | 380 | 140 | 73 |
| * 16 | 600 | 300 | 50 |
| 17 | 360 | 210 | 42 |
| 18 | 300 | 100 | 67 |
| 19 | 300 | 30 | 90 |
| 20 | 330 | 0 | 100 |
| 21 | 250 | 0 | 100 |
| 22 | 340 | 0 | 100 |
| 23 | 320 | 0 | 100 |
| 24 | 560 | 50 | 91 |
| 25 | 350 | 0 | 100 |
| 26 | 270 | 5 | 98 |
| 27 | 450 | 20 | 96 |
| 28 | 480 | 50 | 90 |
| 29 | 220 | 30 | 86 |
| 30 | 410 | 90 | 78 |
| 31 | 220 | 100 | 55 |
| 32 | 400 | 130 | 68 |
| 33 | 420 | 190 | 55 |
| 34 | 370 | 170 | 54 |
| 35 | 380 | 150 | 61 |
| * 36 | 430 | 160 | 63 |
| 37 | 450 | 160 | 64 |
| 38 | 400 | 120 | 70 |
| 39 | 450 | 160 | 64 |
| 40 | 480 | 120 | 75 |
| 41 | 500 | 90 | 82 |
| 42 | 510 | 80 | 84 |
| 43 | 520 | 70 | 87 |
| 44 | 500 | 5 | 99 |
| 45 | 440 | 15 | 97 |
| 46 | 710 | 90 | 87 |

* die basische Verbindung wird zugegeben

Tabelle 2 (Fortsetzung)

| Zeitdauer [Tage] | Schadstoffkonzentration [mg/m$^3$] | | Abbau [%] |
|---|---|---|---|
| | vorher | nachher | |
| 47 | 525 | 40 | 92 |
| 48 | 530 | 10 | 98 |
| 49 | 490 | 0 | 100 |
| 50 | 510 | 50 | 90 |
| 51 | 550 | 100 | 82 |
| 52 | 600 | 140 | 77 |
| 53 | 515 | 130 | 63 |
| 54 | 760 | 210 | 82 |
| * 55 | 440 | 210 | 52 |
| 56 | 300 | 110 | 63 |
| 57 | 425 | 100 | 76 |
| 58 | 525 | 225 | 57 |
| 59 | 600 | 90 | 85 |
| 60 | 725 | 115 | 84 |
| 61 | 560 | 115 | 79 |
| 62 | 325 | 30 | 91 |
| 63 | 325 | 50 | 85 |
| 64 | 450 | 135 | 70 |
| 65 | 450 | 100 | 78 |
| 66 | 390 | 100 | 74 |
| 67 | 240 | 20 | 92 |
| 68 | 370 | 110 | 70 |
| 69 | 350 | 140 | 60 |
| 70 | 350 | 140 | 60 |

\* die basische Verbindung wird zugegeben

Beispiel 3

Entsprechend Beispiel 1 wird ein mit Toluol belasteter Luftstrom (0,5 m$^3$/h) durch ein Biofilter, gefüllt mit einem Kompost/Aktivkohle Gemisch, geleitet. Zu verschiedenen Zeitpunkten wird nach der Befeuchtung mit Wasser der Luftstrom mit 3 g Ammoniakgas versetzt. Die Auswirkung dieser Zugaben auf die Abbauleistung ist wie in Tabelle 2 beschrieben.

**Ansprüche**

1. Verfahren zur biologischen Entsorgung und Reinigung von mit Schadstoffen belasteter Abluft mit Hilfe von Biofiltern, dadurch gekennzeichnet, dass die belastete Abluft vor dem Eintritt in ein Biofilter mit einer gasförmigen und/oder in einem Lösungsmittel gelösten basischen Verbindung oder Mischung von basischen Verbindungen versetzt wird.

2. Verfahren gemäss Anspruch 1, dadurch gekennzeichnet, dass die belastete Abluft mit Wasser oder Wasserdampf befeuchtet und vor und/oder nach der Befeuchtung mit der basischen Verbindung versetzt wird.

3. Verfahren gemäss Anspruch 1, dadurch gekennzeichnet, dass die belastete Abluft mit Wasser oder Wasserdampf befeuchtet und gleichzeitig mit der basischen Verbindung versetzt wird.

4. Verfahren gemäss Anspruch 1, dadurch gekennzeichnet, dass die belastete Abluft mit einer in Wasser gelösten basischen Verbindung befeuchtet wird.

5. Verfahren gemäss Anspruch 1, dadurch gekennzeichnet, dass als Lösungsmittel organische Lösungsmittel oder Wasser eingesetzt werden.

6. Verfahren gemäss Anspruch 1, dadurch gekennzeichnet, dass als basische Verbindungen Alkali- und/oder Erdalkalihydroxide und/oder stickstoffhaltige Verbindungen eingesetzt werden.

7. Verfahren gemäss Anspruch 6, dadurch gekennzeichnet, dass als basische Verbindung Ammoniak, Ammoniumverbindungen und/oder Amine eingesetzt werden.

8. Verfahren gemäss Anspruch 7, dadurch gekennzeichnet, dass man die Abluft nach oder während der Befeuchtung mit Ammoniak oder Ammoniakwasser versetzt.

9. Verfahren gemäss einem der Ansprüche 1 bis 8, dadurch gekennzeichnet, dass die basische Verbindung in Abhängigkeit vom pH-Wert dosiert zugesetzt wird, wobei der pH-Wert im Biofilter, im Kondensat, im Abwasser und/oder in der gereinigten Abluft nach deren Austritt aus dem Biofilter gemessen wird.

10. Verfahren gemäss einem der Ansprüche 1 bis 9, dadurch gekennzeichnet, dass die belastete Abluft durch einen separaten Puffer geleitet wird, der vor und/oder hinter der Befeuchtungseinrichtung, vor und/oder hinter der Zuleitungseinrichtung für die basischen Verbindungen oder auch zwischen gegebenenfalls mehreren Biofiltern angeordnet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 248 256 (H. HUBMER) <br> * vollständiges Dokument * <br> --- | 1,6,7 | B 01 D 53/34 |
| A,D | EP-A-0 142 872 (CLAIR TECH B.V.) <br> * Ansprüche 1-3,14,15 * <br> --- | 1,2,6, 10 | |
| A | DE-U-8 623 752 (P. THOLANDER) <br> * Ansprüche 1,2; Seite 5, Zeilen 3-11 * <br> ----- | 1-5,9 | |

| | |
|---|---|
| | RECHERCHIERTE SACHGEBIETE (Int. Cl.4) |
| | B 01 D 53/00 |

Der vorliegende Recherchenbericht wurde für alle Patentansprüche erstellt

| Recherchenort | Abschlußdatum der Recherche | Prüfer |
|---|---|---|
| BERLIN | 30-07-1989 | BERTRAM H E H |